# EUROPEAN PATENT APPLICATION

(11) **EP 1 650 484 A1**
(43) Date of publication of application: **26.04.2006**
(21) Application number: 04024867.6
(22) Date of filing: 19.10.2004
(51) Int. Cl.: F16L 33/08

(54) **Hose clamp**

(71) Applicant: Chen, Dian Tai, Yungshun Tsun, Tatu Hsiang, Taichung County (TW)
(72) Inventor: Chen, Dian Tai, Yungshun Tsun, Tatu Hsiang, Taichung County (TW)
(74) Representative: Viering, Jentschura & Partner

(57) **Abstract**

A hose clamp includes a binding belt (20), which has a flat head (21), a protruded portion (22) adjacent to the flat head (21), a locating hole (23) formed in the protruded portion (22), a through hole (24) cut through the flat head (21), two bottom welding flanges (25) at two sides of the through hole (24), and two bottom stop blocks (26) in front of the through hole (24), and a screw holder (30) attached to the top surface of the flat head (21) to hold a screw (10) for joining the ends of the binding belt (20) and having two mounting plates (31) respectively clamped on the bottom surface of the flat head (21) and stopped between the stop blocks (26) and the protruded portion (22) and respectively welded to the welding flanges (25) by spot welding, the mounting plates (31) each having a positioning rod (32) respectively engaged into the locating hole (23) in the protruded portion (22).

## Description

### BACKGROUND OF THE INVENTION

### 1. Field of the Invention:

The present invention relates to a hose clamp for fastening a hose to a pipe and more particularly, to a high-strength hose clamp, which is durable in use.

### 2. Description of the Related Art:

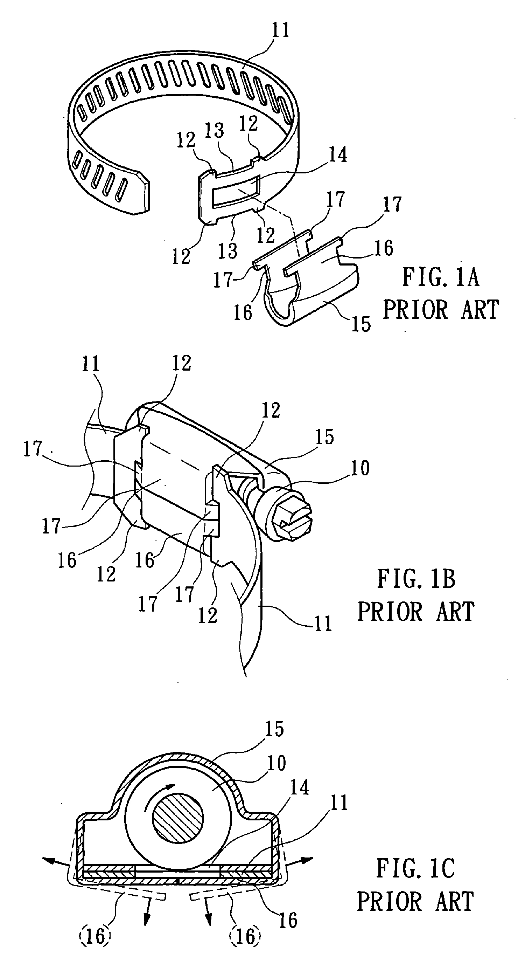

FIGS. 1A and 1B show a hose clamp according to the prior art. According to this design, the hose clamp comprises a binding belt **11**, and a screw holder **15** holding a screw **10**. The binding belt **11** has a through hole **14** in the flat head thereof, two side notches **13** at two opposite lateral sides of the flat head, and four stop flanges **12** at two ends of each of the side notches **13**. The screw holder **15** has two mounting plates **16** respectively fastened to the side notches **13** and stopped between the stop flanges **12** and locating rods **17** respectively extended from the mounting plates **16** at two sides and inserted through the through hole **14** from the back side toward the front side and then respectively clamped on the front surface of the flat head of the binding belt **11** in four corners around the through hole **14**. This design of hose clamp is still not satisfactory in function because of the following drawbacks:
1. When the user rotating the screw **10** to fasten up the hose clamp, the torsional force produced from the rotary motion of the screw **10** may cause the locating rods **17** to deform and to disengage from the flat head of the binding belt **11** (see the imaginary line shown in FIG. 1C).
2. When rotating the screw **10** to fasten up the hose clamp, the torsional force thus produced may cause the mounting plates **16** to deform and to disengage from the side notches **13** of the flat head of the binding belt **11**.

### SUMMARY OF THE INVENTION

The present invention has been accomplished under the circumstances in view. It is the main object of the present invention to provide hose clamp, which has a high strength and is durable in use.

To achieve this and other objects of the present invention, the hose clamp comprises a binding belt, the binding belt having a flat head, the flat head having a top surface and a bottom surface, a protruded portion adjacent to the flat head, a locating hole formed in the protruded portion, a through hole cut through the flat head, two welding flanges protruded from the bottom surface of the flat head at two opposite lateral sides of the through hole, and a plurality of stop blocks protruded from the bottom surface of the flat head in front of the through hole; and a screw holder fastened to the flat head of the binding belt to hold a screw for joining the ends of the binding belt, the screw holder comprising two mounting plates respectively clamped on the bottom surface of the flat head and stopped between the stop blocks and the protruded portion and respectively welded to the welding flanges by spot welding, the mounting plates each having a positioning rod respectively engaged into the locating hole in the protruded portion.

### BRIEF DESCRIPTION OF THE DRAWINGS

FIG. 1A is an exploded view of a hose clamp according to the prior art.
FIG. 1B is an assembly view in an enlarged scale of the hose clamp according to the prior art.
FIG. 1C is a schematic sectional view showing a breaking status of the hose clamp according to the prior art.
FIG. 2A is an exploded view of a hose clamp according to the present invention.
FIG. 2B is an assembly view of the hose clamp according to the present invention.
FIG. 3 is a schematic sectional view showing the fastening operation of the hose clamp according to the present invention.
FIG. 4 shows an alternate form of the hose clamp according to the present invention (the screw holder not shown).
FIG. 5 shows another alternate form of the hose clamp according to the present invention (the screw holder not shown).
FIG. 6 is an exploded view of still another alternate form of the hose clamp according to the present invention.
FIG. 7 is a perspective view of still another alternate form of the hose clamp according to the present invention.
FIG. 8 is a perspective view of still another alternate form of the hose clamp according to the present invention.

### DETAILED DESCRIPTION OF THE PREFERRED EMBODIMENT

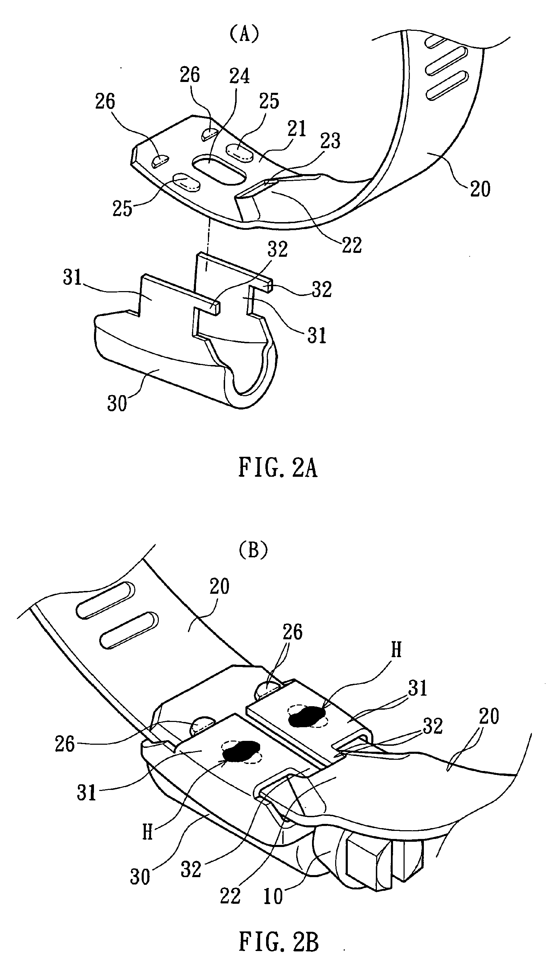

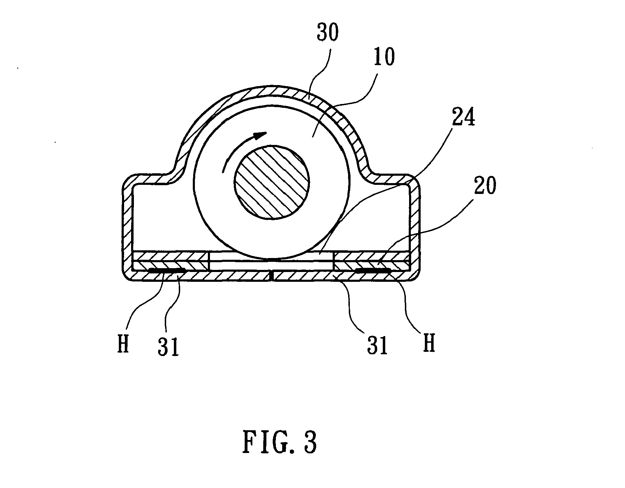

Referring to FIGS. 2A, 2B, and 3, a hose clamp in accordance with one embodiment of the present invention is shown comprised of a binding belt **20** and a screw holder **30** mounted with a screw **10**.

The binding belt **20** has a flat head **21**, a protruded portion **22** adjacent to the flat head **21**, a locating hole **23** formed in the protruded portion **22**, a through hole **24** cut through the top and bottom surfaces of the flat head **21**, two welding flanges **25** protruded from the bottom surface of the flat head **21** at two opposite lateral sides of the through hole **24**, and two stop blocks **26** protruded from the bottom surface of the flat head **21** in front of the through hole **24**.

The screw holder **30** comprises two mounting plates **31** symmetrically disposed at two sides. Each mounting plate **31** has a positioning rod **32**.

During installation, the screw holder **30** is attached to the top surface of the flat head **21** of the binding belt **20**, and then the mounting plates **31** are respectively bent inwards and clamped on the bottom surface of the flat head **21** of the binding belt **20** and stopped between the stop blocks **26** and the protruded portion **22**, keeping the positioning rods **32** engaged into the locating hole **23**, and then mounting plates **31** are fixedly fastened to the welding flanges **25** by spot welding. H.

Because the mounting plates **31** of the screw holder **30** are stopped between the stop blocks **26** and the protruded portion **22** and because the positioning rods **32** of the mounting plates **31** are respectively engaged into the locating hole **23** of the binding belt **20**, rotating the screw **10** to fasten up the binding belt **20** does not cause the screw holder **30** to break or to disconnect from the flat head **21**. Further, because the mounting plates **31** are respectively welded to the welding flanges **25**, the screw holder **30** is maintained firmly secured to the flat head **21** of the binding belt **20**.

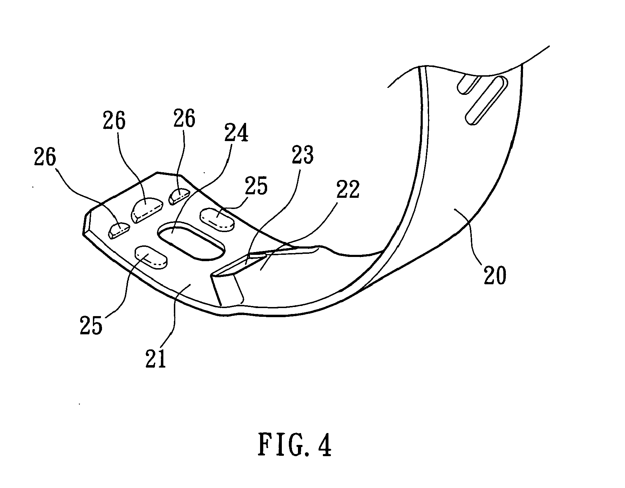

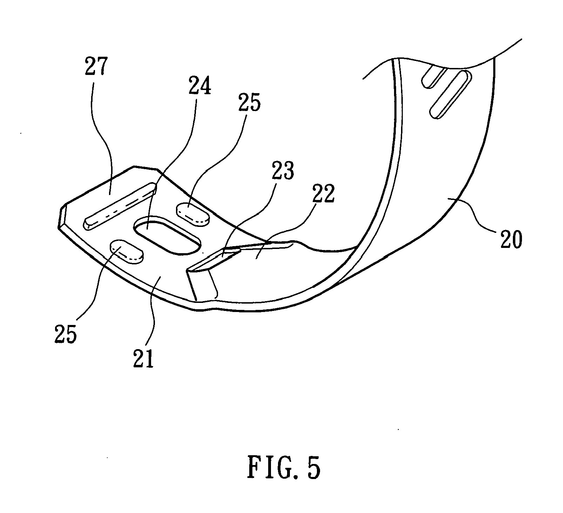

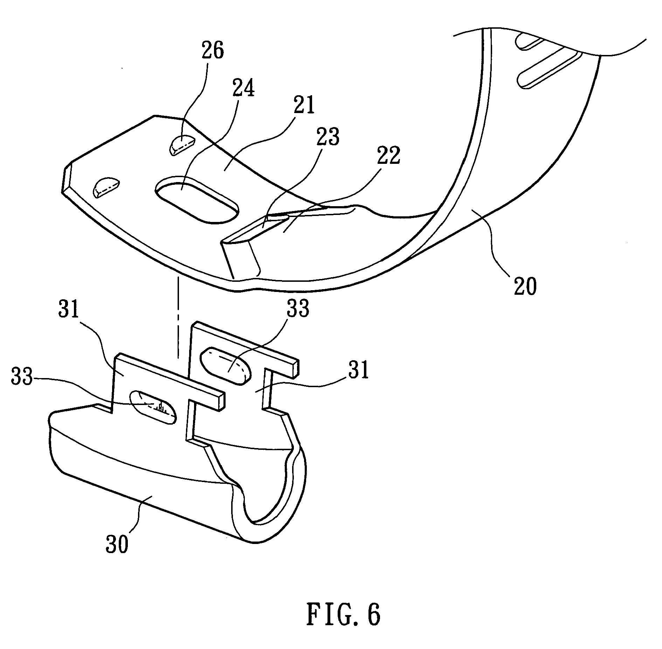

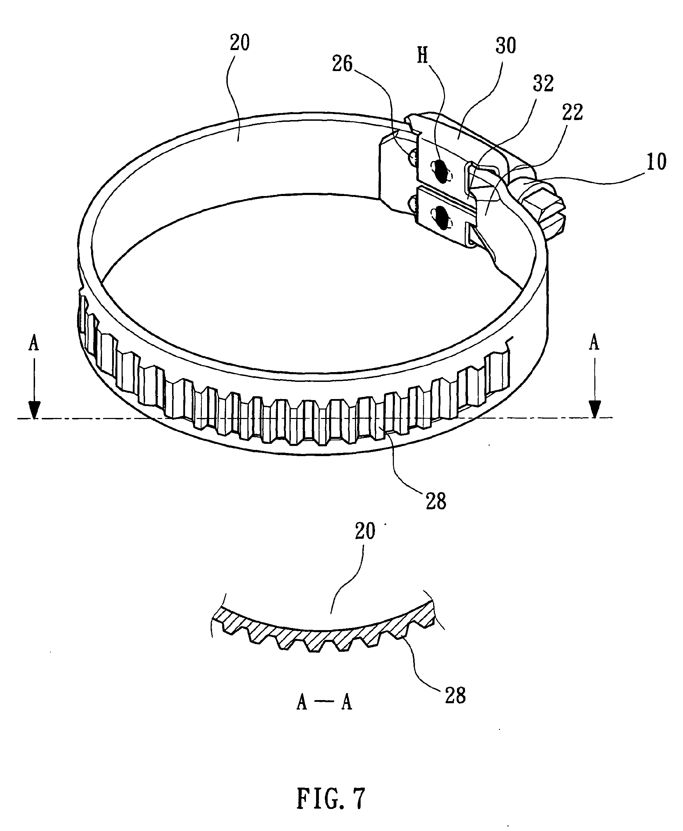

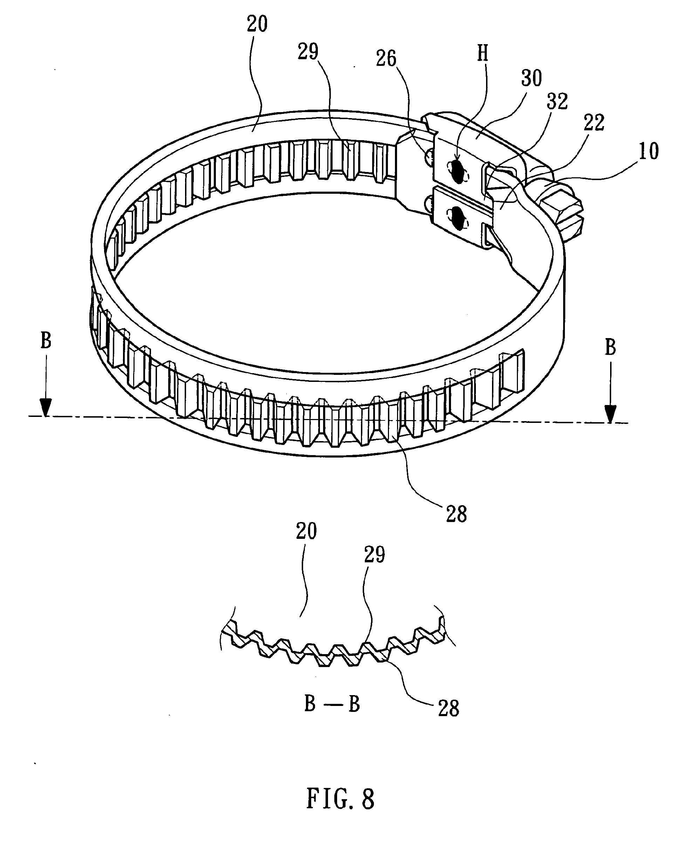

The hose clamp may be variously embodied. According to the embodiment shown in FIG. 4, there are three stop blocks **26** protruded from the bottom surface of the flat head **21** and transversely aligned in a line in front of the through hole **24**. According to the embodiment shown in FIG. 5, a transverse stop rib **27** is provided at the flat head **21** to substitute for the aforesaid stop blocks **26**. According to the embodiment shown in FIG. 6, the two mounting plates **31** of the screw holder **30** each have a welding flange **33** for welding to the flat bottom surface of the flat head **21** of the binding belt **20**. According to the embodiment shown in FIG. 7, the binding belt **20** has a series of teeth **28** arranged around the outer (top) surface thereof for engagement with the screw **10**. According to the embodiment shown in FIG. 8, the binding belt **20** has a first series of teeth **28** arranged around the outer (top) surface thereof for engagement with the screw **10** and a second series of teeth **29** arranged around the inner (bottom) surface thereof for engaging the peripheral wall of the hose to be affixed.

A prototype of hose clamp has been constructed with the features of FIGS. 2-8. The hose clamp functions smoothly to provide all the features discussed earlier.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A hose clamp comprising:
a binding belt, said binding belt having a flat head, said flat head having a top surface and a bottom surface, a protruded portion adjacent to said flat head, a locating hole formed in said protruded portion, a through hole cut through said flat head, two welding flanges protruded from the bottom surface of said flat head at two opposite lateral sides of said through hole, and a plurality of stop blocks protruded from the bottom surface of said flat head in front of said through hole; and
a screw holder fastened to said flat head of said binding belt to hold a screw for joining the ends of said binding belt, said screw holder comprising two mounting plates respectively clamped on the bottom surface of said flat head and stopped between said stop blocks and said protruded portion and respectively welded to said welding flanges by spot welding, said mounting plates each having a positioning rod respectively engaged into said locating hole in said protruded portion.

2. The hose clamp as claimed in claim 1, wherein said stop blocks are connected to one another in a line, forming a transverse stop rib.

3. The hose clamp as claimed in claim 1, wherein said mounting plates of said screw holder each have a welding flange respectively welded to the flat bottom surface of said flat head by spot welding.
